# FASCICULE DE BREVET EUROPEEN

(11) **EP 1 957 749 B1**
(45) Date de publication et mention de la délivrance du brevet: **24.11.2010**
(21) Numéro de dépôt: 06841869.8
(22) Date de dépôt: 06.12.2006
(51) Int. Cl.: E21B 33/12

(54) **MANDRIN DESTINE A ETRE INTRODUIT DANS UN CONDUIT DE CIRCULATION D'UN FLUIDE ET PUITS D'EXPLOITATION DE FLUIDE ASSOCIE**
STECKER ZUR EINFÜHRUNG IN EINEN KANAL, IN DEM EINE FLÜSSIGKEIT FLIESST, UND DAMIT ZUSAMMENHÄNGENDES SUCHBOHRLOCH
PLUG INTENDED TO BE INSERTED INTO A DUCT ON WHICH A FLUID FLOWS AND ASSOCIATED FLUID PROSPECTING WELL

(30) Priorité: 07.12.2005 FR 0512435
(43) Date de publication de la demande: 20.08.2008
(73) Titulaire: Geoservices Equipements, 93150 Le Blanc-Mesnil (FR)
(72) Inventeur: MILLET, François, F-92160 Antony (FR); FOUCHER, Pierre-Arnaud, F-78300 Poissy (FR)
(74) Mandataire: Blot, Philippe Robert Emile
(86) Numéro de dépôt international: PCT/FR2006/002662
(87) Numéro de publication internationale: WO 2007/066003

(56) Documents cités:
- EP-A- 1 197 632
- US-B1- 6 167 963
- US-B2- 6 695 051

## Description

La présente invention concerne un mandrin destiné à être introduit dans un conduit de circulation d'un fluide selon le préambule de revendication 1.

La présente invention s'applique notamment à la fixation étanche d'un outil de fond ou d'un bouchon dans un puits de pétrole. Ce mandrin s'applique à des puits équipés de gorges annulaires de positionnement (désignées par le terme anglais « landing nipple ») présentant une surface de réalisation d'étanchéité notamment en surdiamètre. Ce mandrin s'applique également à des puits qui sont dépourvus de telles régions.

La présente invention s'applique en outre au raclage des parois intérieures du puits avant la fixation d'un outil, ainsi qu'à la prise d'empreinte sur ces parois intérieures.

On connaît de US 6,695,051 un mandrin du type précité, comprenant un corps tubulaire, un ensemble annulaire d'étanchéité radialement expansible, et des chiens d'ancrage déployables.

Un tel mandrin est déployé dans le puits à l'aide d'une ligne de travail au câble pour former un bouchon dans le puits, par exemple lorsqu'une nappe située dans le fond du puits n'est plus exploitée. Il peut être déployé également à l'aide d'un tube creux enroulé (« coiled tubing ») où à l'aide d'un train de tiges de forage.

L'ensemble annulaire d'étanchéité comprend des garnitures annulaires expansibles radialement par compression. De telles garnitures sont réalisées à base d'anneaux de caoutchouc afin d'assurer une barrière d'étanchéité autour du mandrin dans le conduit.

Les garnitures en caoutchouc sont enserrées entre des bagues supérieures et inférieures métalliques. Lorsque l'étanchéité est réalisée autour du mandrin, les bagues supérieures et inférieures sont rapprochées l'une de l'autre et la caoutchouc situé entre ces bagues est comprimé, ce qui provoque son expansion radiale.

Chaque bague est constituée d'une pluralité de segments disposés en quinconce pour former une barrière anti-extrusion au-dessus et en dessous des garnitures d'étanchéité. Les segments s'écartent les uns des autres lors de l'expansion radiale des garnitures.

Un tel mandrin ne donne pas entière satisfaction. En effet, le rapport d'expansion des garnitures en caoutchouc est relativement faible. Pour faciliter la descente dans le puits, il est nécessaire de laisser un espace suffisant entre le mandrin et le conduit, de sorte que le caoutchouc doit être fortement sollicité pour s'appliquer de manière étanche sur les parois du conduit, tout en ayant un rapport d'expansion faible afin d'éviter le fluage de la garniture. Par suite, si le mandrin est maintenu dans le puits pendant une longue période de temps, les garnitures en caoutchouc tendent à fluer entre les segments, de sorte qu'elles subissent une déformation irréversible. Le mandrin ne peut donc pas être retiré facilement du puits.

Il est alors nécessaire de forer le mandrin, ou de retirer la complétion, ce qui conduit à la destruction du mandrin, et à des coûts d'exploitation et/ou à des pertes de production importantes.

Un but de invention est de fournir un mandrin qui peut être fixé de manière étanche dans un puits, et qui peut être installé dans le puits et retiré hors du puits de manière simple, fiable et peu coûteuse.

A cet effet, l'invention a pour objet un mandrin selon la revendication 1.

Le mandrin selon l'invention peut comprendre l'une ou plusieurs des caractéristiques des revendications 2 à 13, prises isolément ou suivant toutes combinaisons techniquement possibles.

L'invention a en outre pour objet un puits d'exploitation de fluide selon la revendication 14.

Le puits d'exploitation selon l'invention peut comprendre l'une ou plusieurs des caractéristiques des revendications 15 et 16.

L'invention sera mieux comprise à la lecture de la description qui va suivre, donnée uniquement à titre d'exemple, et faite en se référant aux dessins annexés, sur desquels :
- la Figure 1 est une vue en perspective de trois-quarts face d'un mandrin selon l'invention, dans la configuration contractée de l'ensemble annulaire ;
- la Figure 2 est une vue en coupe suivant un plan vertical médian du mandrin de la Figure 1, disposé dans un premier puits de pétrole selon l'invention dépourvu de gorge annulaire de réception d'outil ;
- la Figure 3 est une vue en perspective de trois-quarts face de l'ensemble annulaire d'étanchéité du mandrin de la Figure 1 dans sa configuration radialement expansée ;
- la Figure 4 est une vue analogue à la Figure 2 dans une configuration expansée de l'ensemble annulaire ;
- la Figure 4A est une vue partielle à plus grande échelle d'un détail de la Figure 2 dans la configuration expansée ;
- la Figure 5 est une vue analogue à la Figure 1 dans la configuration expansée ;
- la Figure 6 est une vue en coupe d'un détail du mandrin de la Figure 4, dans un deuxième puits de pétrole selon l'invention comprenant une gorge annulaire de réception de l'ensemble annulaire ;
- la Figure 7 est une vue en coupe suivant un plan vertical médian du deuxième puits de pétrole selon l'invention au voisinage de la gorge annulaire de la Figure 6 ; et
- la Figure 8 est une vue analogue à la Figure 4A d'une variante de mandrin selon l'invention.

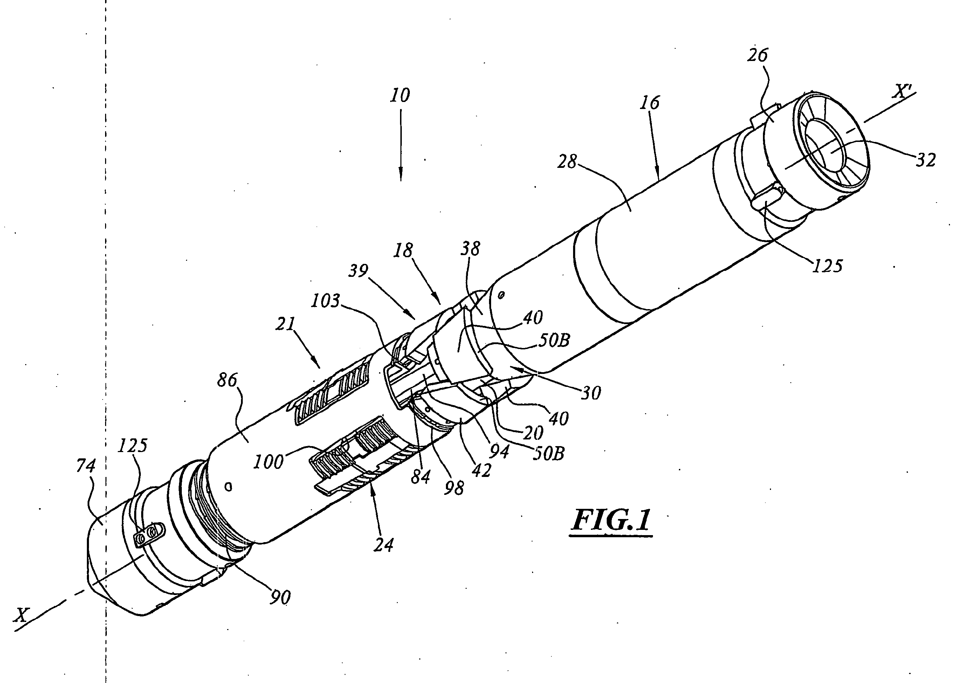

Le mandrin 10 représenté sur les Figures 1 à 6 est destiné à être introduit dans un conduit de production 12 de puits de pétrole disposé dans le sous-sol, également désigné par le terme « tubage de production ».

Le mandrin 10 est destiné à être fixé de manière étanche dans le conduit 12 pour l'obturer en une position donnée. En variante, le mandrin 10 porte un outil de fond, une vanne, une crépine, ou un tube de passage de fluide.

Dans l'exemple représenté sur les Figures 1 à 5, le conduit 12 présente une paroi intérieure 14 sensiblement lisse en regard du mandrin 10. Le conduit 12 est ainsi dépourvu de gorge annulaire d'ancrage désignée par le terme « landing nipple ».

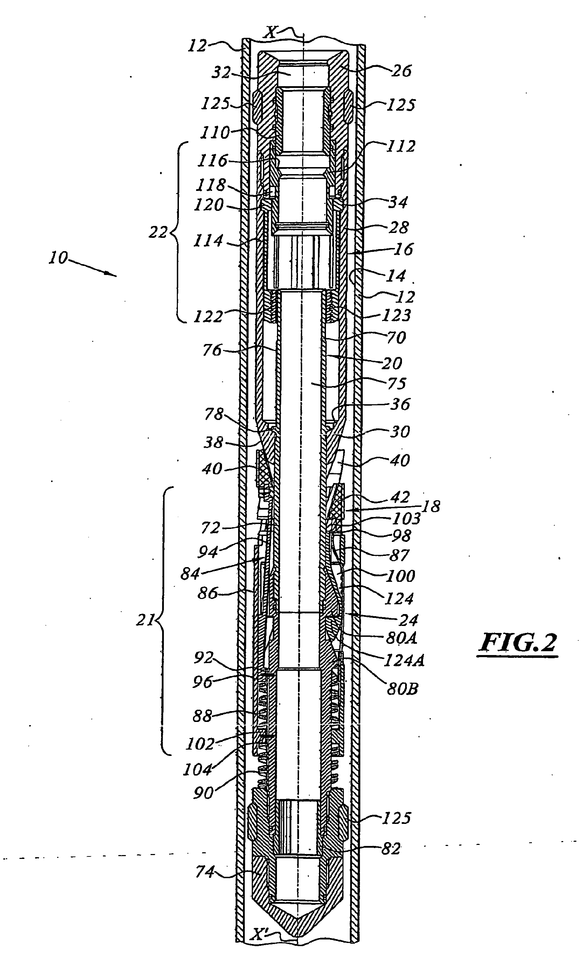

Comme illustré par les Figures 1 et 2, le mandrin 10 comprend un corps tubulaire 16 d'axe longitudinal X-X', un ensemble annulaire d'étanchéité 18 pour réaliser une barrière d'étanchéité autour du mandrin 10 sur la paroi intérieure 14, un tube 20 de manoeuvre de l'ensemble annulaire d'étanchéité, relié à l'ensemble annulaire d'étanchéité 18 par des moyens de liaison libérables 21. Le mandrin 10 comprend en outre des moyens libérables 22 de verrouillage du tube de manoeuvre 20 et des chiens d'ancrage 24 déployables radialement.

Le corps tubulaire 16 comprend, de haut en bas sur la Figure 2, un chapeau de raccordement 26 à une ligne de travail au câble via un outil de pose et de dépose (non représenté), une partie tubulaire intermédiaire creuse 28 et une partie conique 30 inférieure convergente vers le fond du puits, pour supporter l'ensemble annulaire d'étanchéité 18.

Le corps 16 délimite, sur toute sa longueur, un passage central 32 d'axe X-X' débouchant aux extrémités supérieures et inférieures du corps 16.

Le chapeau de raccordement 26 comprend une gorge de réception de d'une tête de raccordement à une ligne de travail au câble (non représentée), pour le déploiement du mandrin 10 dans le puits et son retrait hors du puits. La ligne de travail au câble est par exemple décrite dans la demande française FR-A-2 848 363 de la Demanderesse.

La partie tubulaire intermédiaire 28 est vissée sous le chapeau 26. Elle définit au voisinage du chapeau 26, une gorge annulaire 34 de réception des moyens libérables de verrouillage 22. Cette gorge annulaire 34 s'ouvre dans le passage central 32.

La partie tubulaire 28 délimite dans le passage 32, au voisinage de la partie conique 30, une butée 36 inférieure des moyens de verrouillage 22 et du tube de manoeuvre 20 comme on va le décrire en détail plus bas.

La partie conique 30 présente extérieurement une surface conique 38 d'appui de l'ensemble annulaire 18. Cette surface 38 est convergente vers le fond du puits.

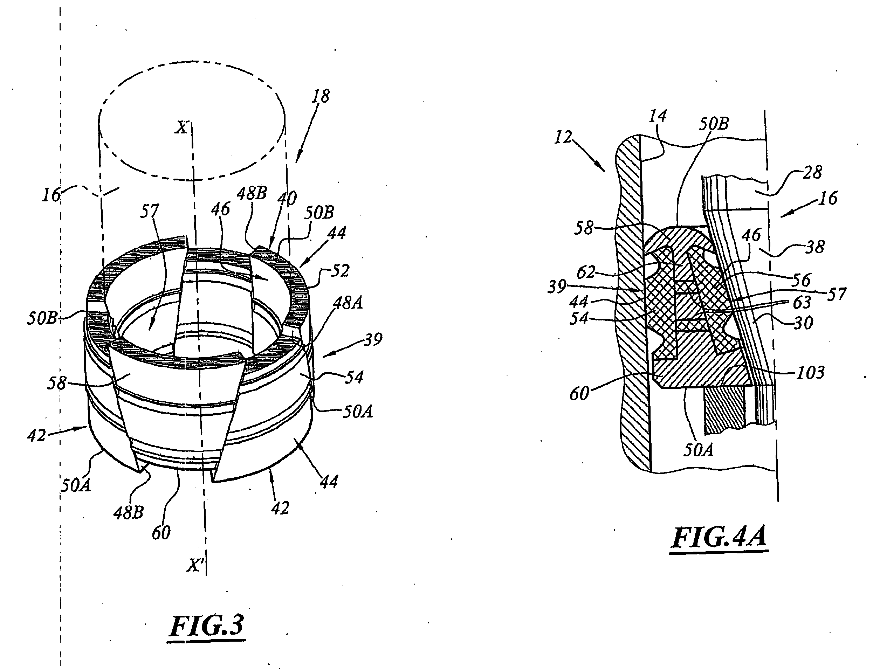

Comme illustré par la Figure 3, l'ensemble annulaire 18 d'étanchéité comprend, en se déplaçant le long d'une surface périphérique extérieure 39 autour de l'axe longitudinal X-X' une alternance de blocs supérieurs 40 et de blocs inférieurs 42 disposés tête-bêche suivant l'axe longitudinal X-X'.

Dans l'exemple représenté sur la Figure 3, l'ensemble annulaire 18 comprend trois blocs supérieurs 40 et trois blocs inférieurs 42.

Chaque bloc 40, 42 délimite une face extérieure 44 d'appui sur le conduit, une face intérieure 46 d'appui sur le corps 16, et deux surfaces latérales 48A, 48B d'expansion raccordant les faces 44 et 46. Chaque bloc 40, 42 présente en outre une surface inférieure 50A et une surface supérieure 50B sensiblement perpendiculaires à l'axe X-X' sur la Figure 3.

Chaque face extérieure 44 est de forme sensiblement cylindrique autour de l'axe X-X' et forme une partie de la surface 39. Chaque face intérieure 46 présente une forme conique convergeant vers le haut le long de l'axe X-X'. Les faces intérieures 46 sont de forme sensiblement conjuguées à la surface d'appui 38 du corps.

Les surfaces latérales 48A, 48B sont de forme sensiblement hélicoïdale d'axe X-X'.

Dans la configuration expansée représentée sur la Figure 3, chaque surface latérale 48A, 48B d'un bloc supérieur 40 est disposée en appui sur une surface latérale 48B, 48A d'un bloc inférieur adjacent 42.

Les blocs inférieurs et supérieurs 40, 42 présentent une forme générale de trapèze en vue de côté, avec la hauteur de chaque trapèze parallèle à l'axe longitudinal X-X'.

Ainsi, les surfaces latérales 48A, 48B de chaque bloc supérieur 40 s'écartent l'une de l'autre en se déplaçant suivant l'axe X-X' vers le haut, alors que les surfaces latérales 48A, 48B de chaque bloc inférieur 42 convergent l'une vers l'autre suivant le même déplacement.

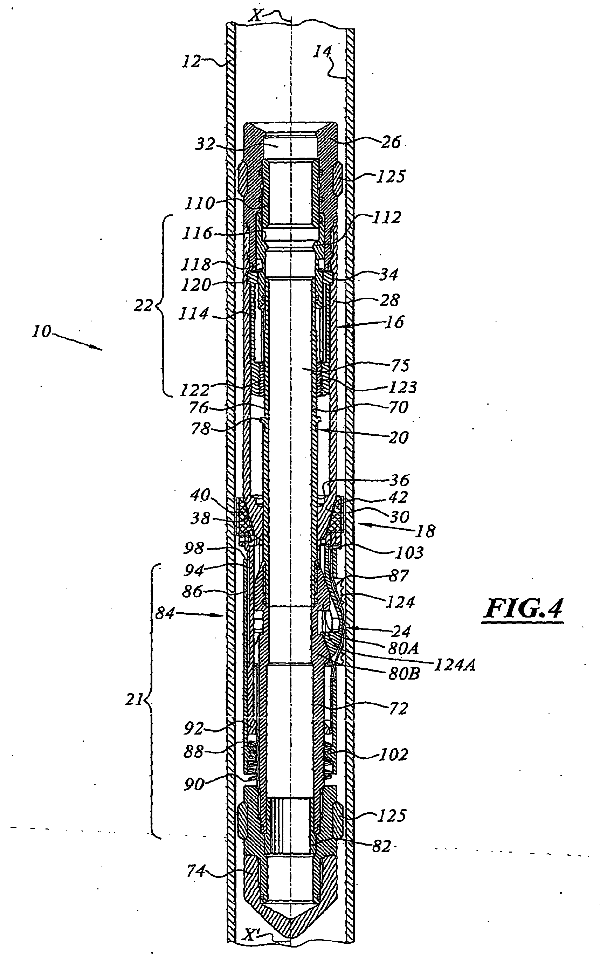

Dans l'exemple illustré par les Figures 3 et 4A, chaque bloc 40, 42 comprend une armature centrale métallique 52, une garniture extérieure 54 d'étanchéité sur le conduit 12, et une garniture intérieure 56 d'étanchéité sur le corps 16, montées de part et d'autre de l'armature 52.

L'armature 52 présente une section transversale sensiblement en forme de I. Elle présente ainsi un bord supérieur 58 et un bord inférieur 60 raccordés entre eux par une âme centrale 62 d'épaisseur inférieure à celles du bord supérieur 58 et du bord inférieur 60.

Les bords 58 et 60 délimitent avec l'âme centrale 62 un logement annulaire extérieur et un logement annulaire intérieur qui reçoivent respectivement tes garnitures 54 et 56. Ces logements débouchent latéralement dans les surfaces latérales 48A, 48B du bloc 40, 42 et sont obturés longitudinalement par les bords inférieurs 58 et 60. Ainsi, le fluage des garnitures 54, 56 est contenu longitudinalement dans les logements intérieur et extérieur.

Comme illustré par la Figure 4A, le bord supérieur 58 comprend, de part et d'autre de l'âme centrale 62, des lèvres déformables axialement et/ou radialement vers le haut lors du contact avec la paroi intérieure 14 du conduit 12 et avec la surface conique 38 du corps 16 sous l'effet de la déformation des garnitures 54, 56, comme on le verra plus bas.

Des passages 63 sont ménagés radialement à travers l'âme centrale 62 et raccordent les logements annulaires extérieur et intérieur.

L'armature 52 est par exemple réalisée à base de métal. Les garnitures 54, 56 sont par exemple réalisées à base d'élastomère ou de plastique. La garniture intérieure 56 est disposée en appui sur la surface conique 38, alors que la garniture extérieure 54 est destinée à être appliquée sur la paroi intérieure 14 du conduit 12. Les garnitures 54, 56 sont par exemple réalisées par surmoulage sur l'armature 52.

En variante, l'armature 52 peut être réalisée en plastique. Dans une autre variante, les garnitures 54 peuvent être réalisées en un métal plus mou que celui de l'armature 52, par exemple du plomb.

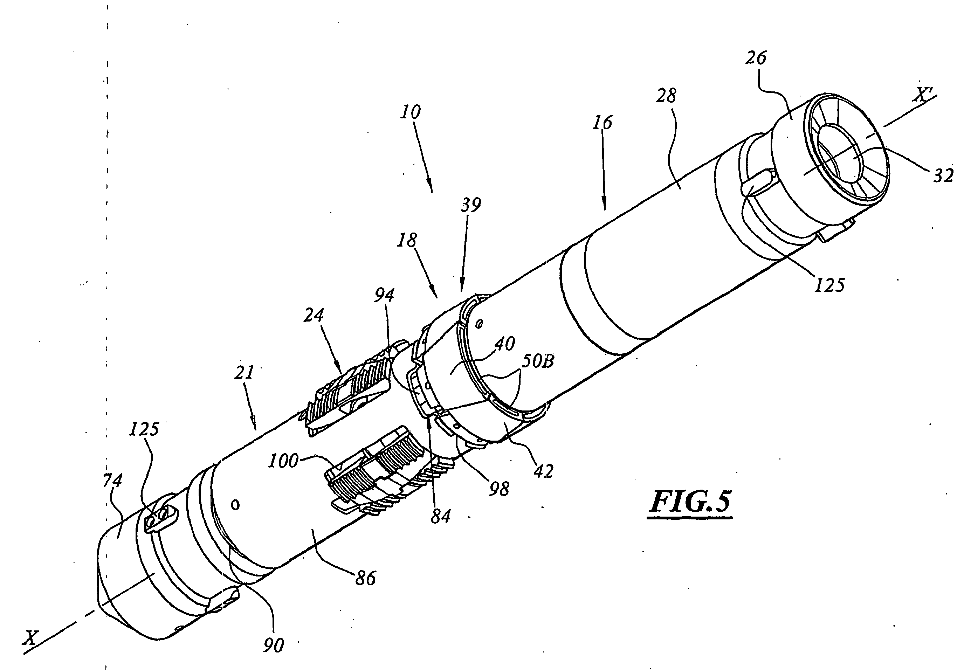

Comme illustré par les Figures 1 et 5, les blocs inférieurs 42 sont déplaçables longitudinalement et radialement par rapport aux blocs supérieurs 40 par coulissement le long des surfaces latérales 48A, 48B entre une configuration déboîtée radialement contractée de l'ensemble annulaire 18 et une configuration emboîtée radialement expansée de cet ensemble 18.

Dans la configuration contractée représentée sur la Figure 1, la distance qui sépare la surface supérieure 50B d'un bloc supérieur 40 de la surface supérieure 50B d'un bloc inférieur adjacent 42 est maximale, les blocs 40, 42 occupant alors une position éloignée. Ainsi, la distance qui sépare les surfaces latérales 48A, 48B en regard de deux blocs supérieurs 40 en regard, prise suivant une circonférence autour de l'axe X-X', est minimale, de même que la distance qui sépare les surfaces latérales 48A, 488 en regard de deux blocs inférieurs 42 en regard.

L'ensemble annulaire 18 est ainsi partiellement déboîté et présente un encombrement radial minimal. Ainsi, le mandrin 10 peut être convoyé de manière sûre et facile dans le conduit 12, en limitant son risque de blocage dans le conduit 12, et facilitant sa descente à contre-courant du flux de liquide présent dans le conduit 12.

Dans la configuration expansée représentée sur la Figure 5, la distance qui sépare le bord supérieur 50B d'un bloc inférieur 42, du bord supérieur 50B d'un bloc supérieur 40 adjacent est minimale et le blocs 40, 42 occupent une position rapprochée. La distance qui sépare les surfaces latérales 48A, 48B en regard de deux blocs supérieurs 40 adjacents est alors maximale, de même que la distance qui sépare les surfaces latérales 48A, 48B en regard de deux blocs inférieurs 42 adjacents.

Comme on le verra plus bas, l'emboîtement des blocs inférieurs 42 entre les blocs supérieurs 40 par coulissement des surfaces latérales 48A, 48B des blocs 42 sur les surfaces latérales des blocs adjacents provoque l'expansion radiale de l'ensemble annulaire 18 par effet de coin sur les surfaces 48A, 48B. L'ensemble annulaire 18 présente ainsi, dans sa configuration expansée, une surface périphérique extérieure 39 sensiblement cylindrique d'encombrement radial maximal.

Dans la configuration expansée, les logements annulaires extérieur et intérieur de chaque bloc 40, 42 débouchent respectivement dans les logements extérieur et intérieur des blocs 42, 40 adjacents, de sorte que les garnitures 54, 56 intérieures et extérieures s'étendent continûment sur au moins une périphérie autour de l'axe X-X'. Les garnitures extérieures 54 définissent ainsi la surface périphérique annulaire d'appui 39 sur le conduit. Les garnitures intérieures 56 définissent une surface périphérique intérieure 57 d'appui sur le corps 16. continue sur au moins une périphérie autour de l'axe X-X'.

En outre, chaque extrémité latérale d'un bord supérieur 58 d'un bloc 40, 42 est appliquée au moins partiellement sur l'extrémité latérale d'un bord supérieur 58 d'un bloc 42, 40 adjacent. De même, l'extrémité latérale de chaque bord inférieur 60 d'un bloc 40, 42 est appliquée sur l'extrémité latérale d'un bord inférieur 60 de chaque bloc 42, 40 adjacent. Les logements annulaires intérieur et extérieur sont ainsi obturés longitudinalement sur toute la périphérie de l'ensemble annulaire 18.

Le rapport de l'encombrement radial de l'ensemble annulaire 18 dans la configuration expansée à l'encombrement radial de l'ensemble annulaire 18 dans la configuration contractée est ainsi compris entre 1,05 et 1,50 et est de préférence supérieur à 1,15. L'ensemble annulaire 18 dans sa configuration contractée est ainsi contenu dans l'encombrement radial de cet ensemble dans la configuration déployée, et avantageusement dans l'encombrement radial du corps 16.

Le tube de manoeuvre 20 est monté à coulissement dans le corps tubulaire 16. Il comprend une partie supérieure 70 disposée dans le passage 32, une partie inférieure 72 qui fait saillie longitudinalement vers le bas à l'extérieur du corps 16, et un bouchon 74 vissé à une extrémité inférieure de la partie inférieure 72. Le tube 20 définit une lumière centrale creuse 75 d'axe X-X' qui débouche à son extrémité supérieure dans le passage central 32.

La partie supérieure 70 présente extérieurement une région supérieure lisse et une région inférieure munie d'une denture 76 d'encliquetage destinée à coopérer avec les moyens de verrouillage 22, comme on le verra plus bas. La partie supérieure 70 est délimitée inférieurement par une nervure annulaire 78 apte à coopérer avec la butée inférieure 36 pour empêcher le déplacement vers le bas du tube 20 au-delà d'une position inférieure.

La partie inférieure 72 comprend, dans une région médiane située en regard des chiens d'accrochage 24, deux groupes de patins 80A, 80B de déploiement des chiens 24 qui font saillie radialement à l'extérieur de la partie 72. Ces patins 80A, 80B présentent une section transversale convergente radialement vers le haut, par exemple une section conique ou plane.

Le bouchon 74 prolonge et obture de manière étanche la lumière centrale 75 à son extrémité inférieure. Il comprend une bague de traction 82 frangible disposée dans la lumière 75 pour l'accrochage d'un outil de pose.

Comme on le verra plus bas, le tube de manoeuvre 20 est mobile longitudinalement par rapport au corps 16 entre une position de repos dans laquelle les blocs 40, 42 sont déboîtés, une position intermédiaire de calage des blocs supérieurs 40 sur le corps 16, une position active d'emboîtement des blocs inférieurs 42 dans les blocs supérieurs 40, et une position d'expansion des chiens d'ancrage 24.

Les moyens de liaison libérables 21 comprennent une pince de guidage 84 des blocs supérieurs 40, une cage 86 de poussée des blocs inférieurs 42 et de guidage radial des chiens 24, des lames 87 de rappel des blocs inférieurs 42 et des chiens 24 vers l'axe X-X', un ressort supérieur 88 et un ressort inférieur 90 de rappel du tube 20 dans sa position de repos.

La pince de guidage 84 comprend une couronne inférieure 92 montée de manière libérable sur le tube de manoeuvre 20 et une pluralité de lames 94 de raccordement au bloc supérieur 40.

La couronne 92 s'étend autour de la partie inférieure 72 du tube 20 sous les patins 80B de déploiement. Elle est raccordée au tube 20 par une première goupille 96 frangible.

Les lames 94 sont réparties autour de la couronne 92. Chaque lame 94 s'étend longitudinalement entre la couronne 92 et un bloc supérieur 40 associé. Le nombre de lames 94 est ainsi égal au nombre de blocs supérieurs 40.

Les lames 94 génèrent une force élastique de plaquage dirigée radialement vers l'axe X-X' pour plaquer les blocs supérieurs 40 contre la surface conique d'appui 38.

La cage 86 s'étend autour du tube de manoeuvre 20. Elle délimite avec le tube 20 un espace annulaire, dans lequel sont reçus la couronne 92, la partie inférieure des lames 94, les chiens d'ancrage 24, les lames de rappel 87 des blocs inférieurs et des chiens d'ancrage 24.

La cage 86 présente de haut en bas sur la Figure 2, une surface supérieure 98 de poussée des blocs inférieurs 42, des encoches longitudinales 100 de passage des chiens d'ancrage 24 et, au voisinage de son extrémité inférieure, une nervure annulaire inférieure 102 disposée en appui sur la partie inférieure du tube 20.

Chaque lame de rappel 87 comprend une extrémité inférieure bloquée radialement par la cage 86, et libre axialement le long de l'axe X-X' entre deux butées sur les chiens 24. Chaque lame 87 comprend une extrémité supérieure fixée à un bloc inférieur 42.

L'extrémité supérieure des lames 87 est fixée dans la surface inférieure 50A des blocs inférieurs 42. Les lames de rappel 87 sollicitent ainsi en permanence les blocs inférieurs 42 radialement vers l'axe X-X' en s'appuyant sur la cage 86. Chaque bloc 42 est ainsi déplaçable radialement par rapport à la surface supérieure 98, par coulissement sur une surface supérieure d'une patte 103 solidaire des chiens 24 d'ancrage, interposée entre la surface supérieure 98 et le bloc 42.

Les encoches 100 s'étendent en regard des chiens d'ancrage 24 pour permettre leur déploiement radial vers l'extérieur à travers la cage 86.

La nervure annulaire 102 est de forme complémentaire à la partie inférieure 72 du tube 20. Elle est raccordée au tube 20 par une deuxième goupille 104 frangible.

Le ressort supérieur 88 est interposé dans l'espace annulaire en appui sur la couronne 92 et sur la nervure 102. Lorsque le ressort 88 est comprimé, il sollicite la cage 86 à l'écart de la pince de guidage 84.

Le ressort inférieur 90 est interposé entre la nervure annulaire 102 et le bouchon 74. Il sollicite le tube 20 vers sa position de repos.

Les moyens de verrouillage 22 comprennent de haut en bas sur la Figure 2, une chemise d'égalisation de pression 110, une bague 112 de libération du tube 20 et une pince 114 de verrouillage du tube 20.

La chemise d'égalisation de pression 110 est formée par un manchon cylindrique disposé de manière étanche dans le chapeau de raccordement 26. La chemise 110 est montée coulissante dans le passage central 32 entre une position supérieure d'étanchéité et une position inférieure d'appui sur la bague 112.

La bague de libération 112 est également formée par un manchon sensiblement cylindrique. Elle reçoit dans sa partie supérieure, une partie inférieure de la chemise 110 d'égalisation de pression.

La bague de libération 112 présente une butée intérieure annulaire 116 destinée à coopérer avec la chemise 110 lorsque celle-ci se déplace vers sa position inférieure.

La bague 112 est déplaçable entre une position supérieure de maintien de la pince 114 et une position inférieure de libération de cette pince 114 par rappel élastique. Elle délimite extérieurement un logement annulaire 118.

La pince 114 est également de forme tubulaire. Elle comprend un bourrelet supérieur 120 de blocage en position longitudinale, et une surface intérieure dentée 122 d'encliquetage du tube 20. Une bague intermédiaire 123 fendue est engagée extérieurement dans la surface intérieure dentée 122, entre cette surface 122 et le tube 20. La bague intermédiaire 123 présente une surface intérieure d'encliquetage du tube 20.

La pince de verrouillage 114 est ainsi mobile entre une position supérieure de blocage du tube 20, dans laquelle le bourrelet 120 est reçu dans la gorge annulaire 34 du corps 16 et une position inférieure dans laquelle le bourrelet 120 est reçu dans le logement 118 de la bague de libération, et dans laquelle l'extrémité inférieure de la pince 114 surface inférieure 122 est disposée en appui sur la butée 36.

Les chiens d'ancrage 24 sont disposés axialement sous les blocs inférieurs 42. Ils sont répartis autour de l'axe X-X'.

Chaque chien 24 comprend un support 124 déployable radialement par les patins 80A, 80B entre une position rétractée dans la cage 86 sous l'action des lames 87, et une position déployée radialement vers l'extérieur en saillie à travers les encoches 100, tout en restant prisonniers de la cage 86 sous l'action des lames 87.

Les lames de rappel 87 sont appliquées sur une surface extérieure des supports 124 et se déploient radialement conjointement avec les supports 124. Les pattes de coulissement 103 sont raccordées aux supports 124. La surface supérieure des pattes 103 s'étend radialement vers l'extérieur.

Les supports 124 présentant une surface supérieure 124A de butée dirigée vers le haut située sous un patin 80A de déploiement, en regard de ce patin 80A.

Des patins de centrage 125 font saillie radialement vers l'extérieur à partir du chapeau 26 et du bouchon 74 pour aligner le mandrin 10 axialement dans le conduit et le protéger lors de sa descente et de sa remontée dans le conduit 12.

Le fonctionnement du mandrin 10 selon l'invention va maintenant être décrit.

Initialement, comme représenté sur les Figures 1 et 2, le mandrin 10 est placé dans une configuration de descente dans le conduit 12.

A cet effet, le tube 20 est disposé dans sa position de repos, dans laquelle la distance qui sépare le bouchon 74 du corps 16 est maximale. Dans cette position, la nervure annulaire 78 est en appui contre la butée 36. Par ailleurs, la pince de guidage 84 est maintenue solidaire de la partie inférieure 72 du tube 20 par la première goupille 96. Les blocs supérieurs 40 sont ainsi disposés en appui sur la surface conique 38 en regard d'une partie inférieure de cette surface. Ils sont maintenus plaqués en appui contre la surface 38 par les lames 94.

La cage 86 est maintenue solidaire de la partie inférieure 72 du tube 20 par la deuxième goupille 104, de sorte que les blocs inférieurs 42 sont disposés partiellement hors des blocs supérieurs 40 en dessous de ces blocs 40. L'ensemble annulaire 18 d'étanchéité occupe donc sa configuration partiellement déboîtée, contractée radialement.

Les chiens d'ancrage 24 sont rétractés dans la cage 86. Le ressort inférieur 90 est maintenu précontraint pour solliciter le tube 20 vers sa position de repos.

Le mandrin 10 présente donc un encombrement radial minimal permettant une descente aisée dans le conduit 12, sans risque d'endommagement de la garniture 18. L'interstice minimal entre le mandrin 10 et la paroi intérieure 14 du conduit 12 est suffisamment large pour limiter les problèmes dus au déplacement du mandrin 10 à contre-courant du flux de liquide présent dans le conduit 12. Les patins dé centrage 125 permettent le guidage du mandrin 10 dans le conduit et son alignement suivant un axe longitudinal du conduit, et la protection du mandrin 10 lors de la montée et de la descente.

Dans cette configuration de descente, la chemise 110 est placée dans sa position supérieure à l'écart de la butée intérieure annulaire 116 de la bague de libération 112. La bague de libération 112 est disposée de sorte que le logement annulaire 118 s'étend au-dessus du bourrelet supérieur 120 de la pince de verrouillage 114, lequel est bloqué en position dans la gorge annulaire 34.

Un outil de pose est par tailleurs inséré dans le passage central 32 et dans la lumière centrale 75 avant la descente dans le puits pour coopérer avec la bague de traction 82 et le chapeau de raccordement 26.

Cet outil présente alors une partie fixe (non représentée) en appui et/ou crochetée sur le chapeau 26 et une partie mobile (non représentée) engagée dans la bague de traction 82 frangible.

Le mandrin 10 est alors descendu dans le conduit 12 en accrochant l'outil de pose à une ligne de travail au câble.

Lorsque le mandrin 10 atteint une position souhaitée dans le puits, l'outil de pose déplace la bague de traction 82 frangible vers le haut en maintenant le corps 16 longitudinalement fixe par rapport au conduit 12. Le tube 20 passe alors de sa position de repos à sa position intermédiaire.

Lors de ce déplacement, la pince de guidage 84 est maintenue solidaire du tube 20, de sorte que les blocs supérieurs 40 coulissent longitudinalement vers le haut sur la surface conique 38 provoquant ainsi leur expansion radiale. Les lames 94 maintiennent les blocs supérieurs 40 appliqués contre cette surface 38 lors du déplacement.

La cage 86 est également solidaire du tube 20, de sorte que les blocs inférieurs 42 se déplacent simultanément vers le haut par empilement mécanique entre la surface supérieure 98, les pattes 103 et les blocs inférieurs 42. La distance entre la surface supérieure 50B d'un bloc supérieur 40 et la surface supérieure 50B d'un bloc inférieur adjacent 42 est maintenue constante lors de ce déplacement.

De même, la partie supérieure 70 du tube 20 remonte également dans la pince de verrouillage 114. Toutefois, la denture extérieure 76 reste située sous la surface intérieure-dentée 122, ce qui permet le retour du tube 20 vers sa position de repos, si la position du mandrin 10 doit être modifiée.

Puis, la première goupille 96 fixée entre la couronne de la pince 92 et le tube 20 est rompue pour libérer les blocs supérieurs 40 par rapport au tube 20. Les blocs supérieurs 40 sont alors sensiblement fixes longitudinalement par rapport à la surface supérieure 38.

Le tube 20 coulisse alors longitudinalement de sa position intermédiaire à sa position active. Lors de ce déplacement, la cage 86 se déplace vers le haut avec le tube 20, et pousse vers le haut les pattes 103 et les blocs inférieurs 42. Les blocs inférieurs 42 s'engagent alors entre les blocs supérieurs 40 en coulissant sur la surface conique 38. Les surfaces latérales 48A, 48B de chaque bloc 42 coulissent sur les surfaces latérales 48A, 48B des blocs 40 adjacents.

Ce déplacement par coulissement provoque l'expansion radiale des blocs 42 et 40 par effet de coin.

Par ailleurs, la denture 76 du tube 20 s'engage dans la bague intermédiaire 123, de sorte que la pince 114 et le tube 20 sont en prise par encliquetage. Le retour du tube 20 vers sa position de repos est alors empêché.

Dans la position active représentée sur la figure 5, la distance qui sépare le bord supérieur 50B de chaque bloc supérieur 40 du bord supérieur 50B des blocs inférieurs 42 adjacents est minimale. L'ensemble annulaire 18 occupe alors sa position emboîtée expansée radialement.

Comme précisé précédemment, la surface périphérique extérieure 39 de l'ensemble 18, formée par les faces périphériques extérieures 44 des blocs 40, 42 est continue au moins sur une périphérie autour de l'axe X-X'. Cette surface périphérique extérieure 39 est appliquée contre la paroi intérieure 14 du conduit 12 pour réaliser l'étanchéité autour du mandrin 10. La continuité de la surface 39 est assurée par la compression triaxiale des garnitures extérieures 54 dans les logements annulaires extérieurs.

En outre, la surface périphérique intérieure 57 de l'ensemble 18 formée par les faces périphériques intérieures 46 des blocs 40, 42 est continue sur au moins une périphérie autour de l'axe X-X'. Cette surface périphérique intérieure 57 est appliquée contre la surface d'appui 38 du corps 16 pour réaliser l'étanchéité entre l'ensemble 18 et le corps 16.

La continuité de la surface 57 est assurée par la compression triaxiale des garnitures intérieures 56 dans les logements annulaires intérieurs.

Les logements annulaires sont délimités par les bords 58, ce qui évite l'extrusion des garnitures 54 et 56 sous l'effet de la pression.

Lors du déplacement du tube 20 de sa position intermédiaire à sa position active, la distance entre la nervure annulaire 102 et la couronne 92 diminue notablement, de sorte que le ressort supérieur 88 est fortement comprimé.

Ensuite, la deuxième goupille 104 est rompue et le tube 20 est encore remonté pour déployer les chiens d'ancrage 24 et provoquer leur accrochage sur la paroi 14, sans déplacement axial par rapport à l'ensemble annulaire 18.

Lors du déplacement du tube 20 de sa position active à sa position d'ancrage, les patins 80A se déplacent longitudinalement vers le haut par rapport aux supports 124, ce qui provoque l'expansion radiale des supports 124 par effet de coin et leur ancrage sur la paroi intérieure 14 du conduit 12.

La distance entre la nervure annulaire 102 et le bouchon 74 est alors minimale de sorte que le ressort inférieur 90 est également fortement comprimé.

Dans la position d'ancrage du tube, la bague frangible 82 est rompue, ce qui libère l'outil de pose.

Le mandrin 10 est alors fixé de manière solide et étanche dans le conduit 12. On notera que les blocs inférieurs 42 peuvent toujours se déplacer axialement vers le haut sous l'effet de la pression.

On notera que dans l'exemple représenté sur les figures 2 et 4, la surface intérieure du conduit 12 est sensiblement lisse sur toute la longueur du mandrin 10. Le mandrin 10 permet donc de s'ancrer de manière étanche et solide sur n'importe quel point du conduit 12, sans que des logements annulaires de réception ne soient nécessairement ménagés dans la paroi 14 au niveau de ce point.

Lorsque le mandrin 10 doit être détaché du conduit 12, un outil (non-représenté) est introduit dans le passage 32 pour déplacer la chemise d'égalisation de pression 110 vers le bas afin d'égaliser la pression entre la partie inférieure du conduit 12 située sous l'ensemble d'étanchéité 18 et la partie supérieure du conduit 12 située au-dessus de l'ensemble d'étanchéité 18.

Ensuite, la chemise 110 est poussée vers le bas sur la butée intérieure annulaire 116 pour provoquer le déplacement vers le bas de la bague 112 par rapport au corps 16. Dans la position inférieure de la bague 112, les bourrelets 120 pénètrent dans les logements 118, et sont extraits des gorges annulaires 34.

L'ensemble formé par la bague de libération 112 et la pince de verrouillage 114, la bague fendue 123 et le tube 20 est alors libre de coulisser vers le bas dans le passage 32, jusqu'à ce que la partie inférieure 122 de la pince de verrouillage 114 bute contre la butée 36 du corps 16.

Lors de ce déplacement, et sous l'effet du ressort inférieur 90 et du battage vers le bas de l'outil de récupération, le tube 20 se déplace également vers le bas, depuis sa position d'ancrage vers sa position active, puis vers sa position intermédiaire.

Le déplacement du tube 20 provoque le retrait des chiens 24 dans la cage 86 sous l'action des lames de rappel 87. En outre, les patins 80B butent contre la surface de butée 124A, ce qui provoque le déplacement des blocs inférieurs 42 vers le bas le long de la surface 38, par l'intermédiaire des lames de rappel 87. Lors de ce déplacement, les blocs inférieurs 42 s'éloignent longitudinalement des blocs supérieurs 40.

Ensuite, sous l'action du battage vers le haut de l'outil de récupération accroché au chapeau 26, on déplace les blocs supérieurs 40 par rapport à la surface conique 38. Sous l'action du ressort 88, la cage 86 se déplace à l'écart de la pince de guidage 84 vers le bas. L'ensemble annulaire 18 est alors passé de sa configuration emboîtée radialement expansée à sa configuration déboîtée radialement contractée. Le mandrin 10 est alors remonté facilement et simplement vers la surface dans le conduit 12 permettant le retrait des blocs supérieurs 40 sous l'action des lames 94.

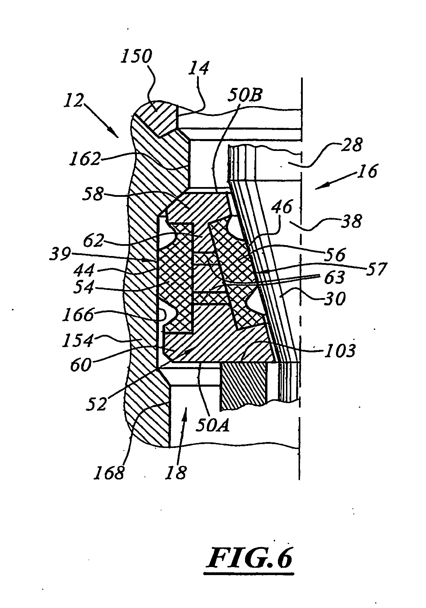

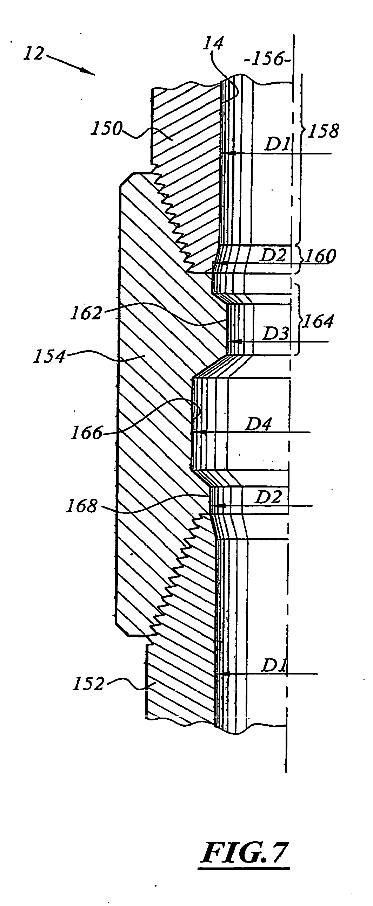

Dans le puits représenté sur les Figures 6 et 7, le conduit 12 comprend un tube supérieur 150 et un tube inférieur 152 raccordés entre eux par un manchon intermédiaire 154 vissé sur des surfaces extérieures filetées respectives des tubes 150, 152.

Comme illustré sur la figure 7, le tube supérieur 150, le tube inférieur 152 et le manchon 154 délimitent un passage central 156 de circulation de fluide.

Le tube supérieur 150 définit dans le passage 156 une première région 158 de diamètre nominal D1 et une deuxième région 160 adjacente au manchon qui présente une surface intérieure s'évasant légèrement vers le bas jusqu'à un diamètre D2 supérieur à D1.

Le manchon 154 comprend une partie annulaire supérieure 162 de butée affleurant le tube supérieur 150, ou en légère saillie dans le passage central 156 par rapport aux tubes 150 et 151. La partie annulaire 162 définit une région 164 du passage 156 de diamètre D3 égal ou inférieur au diamètre D1 de la première région 158 et au diamètre D2 de la deuxième région 160. Le rapport du diamètre D3 au diamètre D1 est par exemple compris entre 0,8 et 1.

Le manchon 154 définit en outre sous la partie 162 un logement annulaire 166 de réception de l'ensemble annulaire 18 d'étanchéité d'un mandrin 10 selon l'invention. Le diamètre D4 du passage 126 dans le logement annulaire 166 est supérieur au diamètre D2 de la deuxième région 160.

Le rapport du diamètre D4 au diamètre D3 est inférieur au rapport d'expansion de l'ensemble annulaire 18 par exemple entre 1,05 et 1,50.

La partie inférieure 168 du manchon présente un diamètre intérieur D2 sensiblement égal au diamètre intérieur de la deuxième région 160 et sensiblement égal au diamètre intérieur de la région du tube inférieur 152 adjacente.

Un tel manchon 154 est ainsi conformé pour recevoir l'ensemble annulaire d'étanchéité 18 d'un mandrin 10 selon l'invention. Comme illustré par la Figure 6, la surface d'appui 39 est appliquée contre le fond du logement 166 et la surface supérieure 50B bute contre la partie annulaire 162 qui a pour fonction d'ancrer vers le haut le mandrin 10. L'étanchéité est ainsi réalisée suivant une périphérie de l'ensemble 18 autour de l'axe X-X' dans le fond d'un logement 166, en retrait dans la paroi 14 du conduit 12, et non sur une partie en saillie par rapport à la paroi 14 du conduit 12. Dans une variante, la partie en saillie 164 est omise.

Le fond du logement 166 étant disposé en retrait dans la paroi 14, le risque de détérioration du fond par des objets circulant dans le passage 156 est limité. Ainsi, les rayures axiales provoquées par le passage successif de câbles dans des puits inclinés (« wire tracking ») ne se produit pas sur le fond du logement 166.

L'ensemble annulaire 18 forme alors des moyens d'ancrage et d'étanchéité simultanés du mandrin 10 dans le conduit 12.

Plus généralement, un mandrin comprenant un corps présentant un axe longitudinal ;
- au moins un ensemble annulaire radialement expansible porté par le corps, l'ensemble annulaire présentant une surface périphérique d'application sur un conduit et une surface périphérique d'application sur le corps ;
- des moyens d'expansion radiale de l'ensemble annulaire, pourrait être utilisé. Ce mandrin comprend un ensemble annulaire d'étanchéité, par exemple dépourvu de blocs 40, 42, et présentant un rapport d'expansion similaire à celui de l'ensemble annulaire 18 selon l'invention, disposé de manière étanche contre le fond du logement 166.

Dans une autre variante, chaque garniture extérieure 54 est formée à base d'un matériau déformable de manière permanente, comme par exemple le plomb.

L'ensemble annulaire 10 est déplacé de sa configuration contractée à sa configuration expansée en un point déterminé du conduit 12 pour réaliser une empreinte de la paroi 14 du conduit 12 en ce point par déformation plastique de la surface 39 des blocs 40, 42. Il est ainsi possible de détecter les irrégularités de surface de la paroi 14, notamment les gorges axiales ménagées lors du passage successif de câbles dans des puits inclinés (« wire tracking »).

Puis, l'ensemble annulaire 18 est placé dans sa configuration contractée pour être remonté à la surface. Une empreinte de la paroi 14 du conduit 12 en un point prédéterminé est ainsi obtenu, ce qui permet d'évaluer l'état de surface de cette paroi. Dans ce cas, le mandrin peut être dépourvu de moyens de verrouillage 22.

Grâce à l'invention qui vient d'être décrite, il est possible de disposer d'un mandrin 10 présentant un ensemble annulaire 18 d'étanchéité et/ou d'ancrage, formé par une pluralité de blocs emboîtables les uns dans les autres, l'ensemble 18 pouvant subir une forte expansion radiale réversible.

A cet effet, l'ensemble annulaire 18 est maintenu dans une configuration contractée pour l'introduction et le retrait du mandrin 10 dans le conduit 12. L'ensemble annulaire 18 est déployé radialement par un emboîtement des blocs 40, 42, notamment pour réaliser une étanchéité entre le mandrin 10 et le conduit 12, ou pour effectuer un raclage ou une empreinte de la paroi intérieure 14 du conduit 12.

En variante, le bouchon 74 est remplacé par une vanne de sécurité à commande électromagnétique comme décrit dans la demande française n° 05 08 880 de la Demanderesse, ou par une vanne de test à fermeture rapide décrite dans FR-A-2 842 881 ou tout autre outil de fond nécessitant un ancrage étanche dans le puits.

Dans une autre variante, le bouchon 74 est remplacé par un simple tube débouchant à ses extrémités, le mandrin 10 formant alors un élément de garnissage (ou « packer ») permanent. Dans ce dernier cas, un dispositif d'activation peut être porté par le mandrin. En outre, le mandrin peut alors être descendu à l'aide d'un train de tiges.

Dans une autre variante, le mandrin comprend au moins deux ensembles annulaires 18 espacés axialement pouvant être disposés en opposition axialement de part et d'autre d'un système d'ancrage comprenant des chiens.

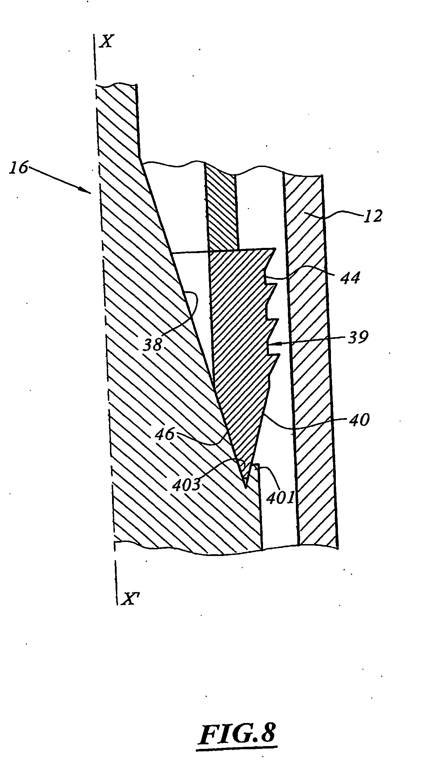

Dans une autre variante représentée partiellement sur la Figure 8, la surface périphérique extérieure 39 de l'ensemble annulaire 18 présente une section transversale en dents de scie ou lisse, et les chiens d'ancrage 24 sont remplacés par des patins de centrage lisses.

Le mandrin 10 est alors déplacé longitudinalement dans le conduit 12, dans la configuration expansée de l'ensemble annulaire 18 pour racler la paroi intérieure 14, ou former un piston déplaçable dans le conduit 12.

Dans ce cas, la surface d'appui 38 délimite extérieurement autour de l'axe X-X' une butée supérieure 401 de blocage en position des blocs supérieurs 40. Cette butée 401 présente une forme plane orthogonale à l'axe X-X' ou une forme conique annulaire convergeant vers l'extrémité inférieure du mandrin 10. Dans ce dernier cas, la butée conique 401 délimite avec la région de la surface d'appui 38 convergeant vers l'extrémité inférieure du mandrin 10, un logement annulaire 403 de réception des blocs 40.

Les blocs supérieurs 40 sont alors amenés au contact de la butée supérieure, avant de rompre la première goupille 96, ce qui permet d'obtenir un diamètre d'expansion déterminé de l'ensemble annulaire.

## Revendications

1. Mandrin (10), destiné à être introduit dans un conduit (12) de circulation d'un fluide, du type comprenant :
- un corps (16) présentant un axe longitudinal (X-X') ;
- au moins un ensemble annulaire (18) radialement expansible porté par le corps (16), l'ensemble annulaire (18) présentant une surface périphérique (39) d'application sur un conduit (12) et une surface périphérique (57) d'application sur le corps (16);
- des moyens (20, 21) d'expansion radiale de l'ensemble annulaire (18) ;
l'ensemble annulaire (18) comprenant, autour de l'axe longitudinal (X-X'), une pluralité de blocs (40, 42) d'expansion radiale, **caractérisé en ce que** chaque bloc (40, 42) présente une première face d'appui (44) délimitant une partie de la surface périphérique (39) d'application sur le conduit (12), une deuxième face d'appui (46) délimitant une partie de la surface périphérique (57) d'application sur le corps (16), et deux surfaces latérales (48A, 48B) disposées respectivement en regard d'une surface latérale (48A, 48B) d'au moins un bloc adjacent (42, 40),et **en ce que** les blocs (40, 42) sont déplaçables les uns par rapport aux autres entre une configuration emboîtée expansée radialement dans laquelle chaque surface latérale (48A, 48B) d'un bloc (40, 42) est appliquée sur la surface latérale (48B, 48A) d'un bloc adjacent (42, 40), et une configuration contractée radialement, contenue dans l'encombrement radial de l'ensemble annulaire (18) dans sa configuration expansée.

2. Mandrin (10) selon la revendication 1, **caractérisé en ce que** chaque bloc (42) est déplaçable par rapport au ou à chaque bloc adjacent (40) par coulissement de ses surfaces latérales (48A, 48B) le long des surfaces latérales (48B, 48A) du ou de chaque bloc adjacent (40) entre la configuration contractée et la configuration expansée, les surfaces latérales (48A, 48B) étant conformées pour provoquer une expansion radiale de l'ensemble annulaire (18) par effet de coin.

3. Mandrin (10) selon la revendication 1 ou 2, **caractérisé en ce qu'**au moins un premier bloc (42) présente une surface latérale (48A) convergeant vers son autre surface latérale (48B) en se déplaçant suivant l'axe longitudinal (X-X') dans un premier sens, au moins un deuxième bloc (40) adjacent au premier bloc (42) comprenant une surface latérale (48A) divergeant à l'écart de son autre surface latérale (48B) en se déplaçant suivant l'axe longitudinal (X-X') dans le premier sens.

4. Mandrin (10) selon la revendication 3, **caractérisé en ce que** chaque bloc (40, 42) présente sensiblement une forme de trapèze, chaque bloc (40, 42) étant disposé tête-bêche suivant l'axe longitudinal (X-X'), avec le ou chaque bloc (42, 40) adjacent, avec la hauteur de chaque trapèze parallèle à l'axe longitudinal (X-X').

5. Mandrin (10) selon l'une quelconque des revendications précédentes, **caractérisé en ce que** le corps (16) présente une surface (38) d'appui de bloc, au moins un des blocs (40, 42) étant monté coulissant longitudinalement sur la surface d'appui de bloc (38) entre une position dans laquelle l'ensemble annulaire (18) est dans sa configuration contractée et une position dans laquelle l'ensemble annulaire (18) est dans sa configuration expansée.

6. Mandrin (10) selon la revendication 5, **caractérisé en ce que** la surface d'appui de bloc (38) est inclinée par rapport à l'axe longitudinal (X-X') et **en ce que** la première face d'appui (44) de chaque bloc (40, 42) est sensiblement cylindrique autour de l'axe longitudinal (X-X'), la deuxième face d'appui (46) étant inclinée par rapport à l'axe longitudinal (X-X'), les faces d'appui (44, 46) étant raccordées entre elles par les surfaces latérales (48A, 48B).

7. Mandrin (10) selon la revendication 6, **caractérisé en ce que** l'ensemble annulaire (18) comprend des moyens de rappel (94) d'au moins un bloc (40) contre la surface d'appui (38).

8. Mandrin (10) selon l'une quelconque des revendications 5 à 7, **caractérisé en ce que** la surface d'appui (38) délimite une butée supérieure de blocage en position des blocs (40).

9. Mandrin (10) selon l'une quelconque des revendications précédentes, **caractérisé en ce que** chaque bloc (40, 42) comprend :
- une armature de renfort (52) comprenant un bord supérieur (58) ou/et un bord inférieur (60) délimitant un logement annulaire extérieur débouchant extérieurement dans les surfaces latérales (48A, 48B),
- une garniture (54) d'étanchéité extérieure disposée dans le logement extérieur;
et **en ce que** dans la configuration expansée, les logements de deux blocs adjacents (40, 42) communiquent entre eux suivant au moins une périphérie autour de l'axe longitudinal (X-X') à travers les surfaces latérales (48A, 48B) et sont obturés longitudinalement par l'un au moins des bords supérieur et/ou inférieur (58, 60).

10. Mandrin (10) selon la revendication 9, **caractérisé en ce que** l'armature de renfort (52) délimite un logement annulaire intérieur débouchant intérieurement et dans les surfaces latérales (48A, 48B), chaque bloc (40, 42) comprenant une garniture d'étanchéité intérieure (56) disposée dans le logement annulaire intérieur et **en ce que** dans la configuration expansée, les logements annulaires intérieurs de deux blocs adjacents (40, 42) communiquent entre eux suivant au moins une périphérie autour de l'axe longitudinal (X-X') à travers les surfaces latérales (48A, 48B).

11. Mandrin (10) selon l'une quelconque des revendications précédentes, **caractérisé en ce qu'**il comprend en outre des organes d'ancrage (24) au conduit (12), déployables radialement par rapport au corps (16), les organes d'ancrage (24) étant disposés sous l'ensemble annulaire (18).

12. Mandrin (10) selon l'une quelconque des revendications précédentes, **caractérisé en ce que** les moyens d'expansion (20, 21) comprennent un organe (20) de manoeuvre, solidaire de manière libérable d'au moins un premier bloc (40), et solidaire d'au moins un deuxième bloc (42), l'organe de manoeuvre (20) étant mobile longitudinalement par rapport au corps (16) entre:
- une position de repos dans laquelle le premier blocs (40) et le deuxième bloc (42) sont solidaires de l'organe de manoeuvre, l'ensemble annulaire (18) occupant sa configuration rétractée ;
- une position intermédiaire dans laquelle le premier bloc (40) est libre par rapport à l'organe de manoeuvre (20) et sensiblement fixe par rapport au corps (16), le deuxième bloc (42) étant solidaire de l'organe de manoeuvre (20) ; et
- une position active d'emboîtement des premier et deuxième blocs (40, 42) dans laquelle l'ensemble annulaire (18) occupe sa configuration expansée.

13. Mandrin (10) selon la revendication 12, **caractérisé en ce qu'**il comprend des moyens (88, 90) de sollicitation de l'organe de manoeuvre depuis sa position active vers sa position intermédiaire, et des moyens (22) libérables de maintien en position de l'organe de manoeuvre (20) dans sa position active.

14. Puits d'exploitation de fluide **caractérisé en ce qu'**il comprend :
• un conduit (12) ;
• un mandrin (10) selon l'une quelconque des revendications précédentes, disposé dans le conduit (12).

15. Puits selon la revendication 14, **caractérisé en ce que** le conduit (12) comprend au moins un premier tube (150), un deuxième tube (152), et un manchon (154) de raccordement des premier et deuxième tubes (150, 152), le premier tube (150), le deuxième tube (152) et le manchon (154) délimitant un passage (156) de circulation de fluide,
et **en ce que** le manchon (154) définit une gorge annulaire (166) de réception de l'ensemble annulaire (18) débouchant dans le passage central (156) et présentant un diamètre (D4) supérieur au diamètre moyen (D1) du passage central (156), l'ensemble annulaire (18) étant appliqué dé manière étanche contre un fond de la gorge annulaire (166) dans sa position déployée.

16. Puits selon la revendication 15, **caractérisé en ce que** le manchon présente une saillie (162) de blocage en position de l'ensemble annulaire (156) qui fait saillie intérieurement dans le passage central (156) par rapport au premier tube (150) et au deuxième tube (152), un bord (58) supérieur de l'ensemble annulaire (18) étant calé axialement contre la saillie (162).

## Claims

1. Mandrel (10) intended to be introduced into a conduit (12) in which a fluid circulates, of the type comprising:
- a body (16) having a longitudinal axis (X-X');
- at least one radially expandable annular assembly (18) carried by the body (16), the annular assembly (18) having a peripheral surface (39) for pressing against a conduit (12) and a peripheral surface (57) for pressing against the body (16);
- means (20, 21) for radially expanding the annular assembly (18);
the annular assembly (18) comprising, around the longitudinal axis (X-X'), a plurality of radial expansion blocks (40, 42), **characterised in that** each block (40, 42) has a first bearing face (44) delimiting a portion of the peripheral surface (39) for pressing against the conduit (12), a second bearing face (46) delimiting a portion of the peripheral surface (57) for pressing against the body (16), and two lateral surfaces (48A, 48B) disposed respectively facing a lateral surface (48A, 48B) of at least one adjacent block (42, 40), and
**in that** the blocks (40, 42) are displaceable relative to one another between a radially expanded, engaged configuration in which each lateral surface (48A, 48B) of a block (40, 42) is pressed against the lateral surface (48B, 48A) of an adjacent block (42, 40), and a radially contracted configuration contained within the radial overall size of the annular assembly (18) in its expanded configuration.

2. Mandrel (10) according to claim 1, **characterised in that** each block (42) is displaceable relative to the or each adjacent block (40) by its lateral surfaces (48A, 48B) sliding along the lateral surfaces (48B, 48A) of the or each adjacent block (40) between the contracted configuration and the expanded configuration, the lateral surfaces (48A, 48B) being shaped to cause the annular assembly (18) to expand radially by a corner effect.

3. Mandrel (10) according to claim 1 or claim 2, **characterised in that** at least a first block (42) has a lateral surface (48A) converging towards its other lateral surface (48B) on moving along the longitudinal axis (X-X') in a first direction, at least a second block (40) adjacent to the first block (42) comprising a lateral surface (48A) that diverges away from its other lateral surface (48B) on moving along the longitudinal axis (X-X') in the first direction.

4. Mandrel (10) according to claim 3, **characterised in that** each block (40, 42) is substantially trapezoidal in shape, each block (40, 42) being disposed head to tail along the longitudinal axis (X-X') with the or each adjacent block (42, 40), with the height of each trapezoid being parallel to the longitudinal axis (X-X').

5. Mandrel (10) according to any one of the preceding claims, **characterised in that** the body (16) has a block bearing surface (38), at least one of the blocks (40, 42) being mounted to slide longitudinally over the block bearing surface (38) between a position in which the annular assembly (18) is in its contracted configuration and a position in which the annular assembly (18) is in its expanded configuration.

6. Mandrel (10) according to claim 5, **characterised in that** the block bearing surface (38) is inclined relative to the longitudinal axis (X-X') and **in that** the first bearing face (44) of each block (40, 42) is substantially cylindrical about the longitudinal axis (X-X'), the second bearing face (46) being inclined relative to the longitudinal axis (X-X'), the bearing faces (44, 46) being interconnected by the lateral surfaces (48A, 48B).

7. Mandrel (10) according to claim 6, **characterised in that** the annular assembly (18) comprises means (94) for returning at least one block (40) against the bearing surface (38).

8. Mandrel (10) according to any one of claims 5 to 7, **characterised in that** the bearing surface (38) delimits an upper abutment for blocking the blocks (40) in position.

9. Mandrel (10) according to any one of the preceding claims, **characterised in that** each block (40, 42) comprises:
- a reinforcement (52) comprising an upper edge (58) or/and a lower edge (60) delimiting an outer annular recess opening externally into the lateral surfaces (48A, 48B),
- an outer sealing gasket (54) disposed in the outer recess;
and **in that** in the expanded configuration, the recesses of two adjacent blocks (40, 42) communicate with one another along the at least one periphery around the longitudinal axis (X-X') through the lateral surfaces (48A, 48B) and are closed longitudinally by at least one of the upper and/or lower edges (58, 60).

10. Mandrel (10) according to claim 9, **characterised in that** the reinforcement (52) delimits an inner annular recess opening out internally and into the lateral surfaces (48A, 48B), each block (40, 42) comprising an inner sealing gasket (56) disposed in the inner annular recess and **in that** in the expanded configuration, the inner annular recesses of two adjacent blocks (40, 42) communicate with one another along the at least one periphery around the longitudinal axis (X-X') through the lateral surfaces (48A, 48B).

11. Mandrel (10) according to any one of the preceding claims, **characterised in that** it further comprises members (24) for anchoring to the conduit (12), the anchor members being radially extendable relative to the body (16) and being disposed under the annular assembly (18).

12. Mandrel (10) according to any one of the preceding claims, **characterised in that** the expansion means (20, 21) comprise a drive member (20) releasably secured to at least a first block (40) and secured to at least a second block (42), the drive member (20) being movable longitudinally relative to the body (16) between:
- a rest position in which the first block (40) and the second block (42) are secured to the drive member, the annular assembly (18) occupying its retracted configuration;
- an intermediate position in which the first block (40) is free relative to the drive member (20) and substantially fixed relative to the body (16), the second block (42) being secured to the drive member (20); and
- an active position for engagement of the first and second blocks (40, 42), in which the annular assembly (18) occupies its expanded configuration.

13. Mandrel (10) according to claim 12, **characterised in that** it comprises means (88, 90) for urging the drive member from its active position towards its intermediate position, and releasable means (22) for holding the drive member (20) in its active position.

14. Fluid prospecting well, **characterised in that** it comprises:
• a conduit (12); and
• a mandrel (10) according to any one of the preceding claims, disposed in the conduit (12).

15. Well according to claim 14, **characterised in that** the conduit (12) comprises at least a first tube (150), a second tube (152) and a sleeve (154) interconnecting the first and second tubes (150, 152), the first tube (150), the second tube (152) and the sleeve (154) delimiting a fluid flow passage (156); and
and **in that** the sleeve (154) defines an annular groove (166) for receiving the annular assembly (18), opening out into the central passage (156) and having a diameter (D4) greater than the mean diameter (D1) of the central passage (156), the annular assembly (18) when in its extended position being pressed in a leaktight manner against a bottom of the annular groove (166).

16. Well according to claim 15, **characterised in that** the sleeve has a projection (162) for blocking the annular assembly (156) in position, which projection projects internally into the central passage (156) relative to the first tube (150) and to the second tube (152), an upper edge (58) of the annular assembly (18) being wedged axially against the projection (162).

## Patentansprüche

1. Dorn (10), der dazu bestimmt ist, in eine Fluidumlaufleitung (12) eingeführt zu werden, umfassend:
- einen Körper (16), der eine Längsachse (X-X') aufweist;
- mindestens eine radial expandierbare ringförmige Einheit (18), die von dem Körper (16) getragen ist, wobei die ringförmige Einheit (18) eine Umfangsfläche (39) zur Anlage an einer Leitung (12) und eine Umfangsfläche (57) zur Anlage an dem Körper (16) aufweist;
- Mittel (20, 21) zur radialen Expansion der ringförmigen Einheit (18);
wobei die ringförmige Einheit (18) um die Längsachse (X-X') herum eine Mehrzahl von Blöcken (40, 42) zur radialen Expansion umfasst, **dadurch gekennzeichnet, dass** jeder Block (40, 42) eine erste Auflageseite (44), die einen Teil der Umfangsfläche (39) zur Anlage an der Leitung (12) abgrenzt, eine zweite Auflageseite (46), die einen Teil der Umfangsfläche (57) zur Anlage an dem Körper (16) abgrenzt, und zwei Seitenflächen (48A, 48B) aufweist, die jeweils gegenüber einer Seitenfläche (48A, 48B) mindestens eines angrenzenden Blocks (42, 40) angeordnet sind, und dass die Blöcke (40, 42) zwischen einer radial expandierten ineinander geschobenen Konfiguration, in der jede Seitenfläche (48A, 48B) eines Blocks (40, 42) an die Seitenfläche (48B, 48A) eines angrenzenden Blocks (42, 40) angelegt ist, und einer radial kontrahierten Konfiguration zueinander beweglich sind, die in der radialen Abmessung der ringförmigen Einheit (18) in ihrer expandierten Konfiguration enthalten ist.

2. Dorn (10) nach Anspruch 1, **dadurch gekennzeichnet, dass** jeder Block (42) bezüglich des oder jedes angrenzenden Blocks (40) durch Gleiten seiner Seitenflächen (48A, 48B) längs der Seitenflächen (48B, 48A) des oder jedes angrenzenden Blocks (40) zwischen der kontrahierten Konfiguration und der expandierten Konfiguration beweglich ist, wobei die Seitenflächen (48A, 48B) ausgebildet sind, um eine radiale Expansion der ringförmigen Einheit (18) durch Keilwirkung zu bewirken.

3. Dorn (10) nach Anspruch 1 oder 2, **dadurch gekennzeichnet, dass** mindestens ein erster Block (42) eine Seitenfläche (48A) aufweist, die auf seine andere Seitenfläche (48B) zu konvergiert, indem man sich längs der Längsachse (X-X') in einer ersten Richtung bewegt, wobei mindestens ein an den ersten Block (42) angrenzender zweiter Block (40) eine Seitenfläche (48A) umfasst, die von seiner anderen Seitenfläche (48B) weg divergiert, indem man sich längs der Längsachse (X-X') in der ersten Richtung bewegt.

4. Dorn (10) nach Anspruch 3, **dadurch gekennzeichnet, dass** jeder Block (40, 42) im Wesentlichen eine Trapezform aufweist, wobei jeder Block (40, 42) gemäß der Längsachse (X-X') bezüglich des oder jedes angrenzenden Blocks umgekehrt angeordnet ist und die Höhe jedes Trapezes zur Längsachse (X-X') parallel ist.

5. Dorn (10) nach einem der vorhergehenden Ansprüche, **dadurch gekennzeichnet, dass** der Körper (16) eine Blockauflagefläche (38) aufweist, wobei mindestens einer der Blöcke (40, 42) auf der Blockauflagefläche (38) zwischen einer Stellung, in der die ringförmige Einheit (18) in ihrer konrtraktierten Konfiguration ist, und einer Stellung, in der die ringförmige Einheit (18) in ihrer expandierten Konfiguration ist, in Längsrichtung verschiebbar montiert ist.

6. Dorn (10) nach Anspruch 5, **dadurch gekennzeichnet, dass** die Blockauflagefläche (38) bezüglich der Längsachse (X-X') geneigt ist und dass die erste Auflageseite (44) jedes Blocks (40, 42) im Wesentlichen um die Längsachse (X-X') zylindrisch ist, wobei die zweite Auflageseite (46) bezüglich der Längsachse (X-X') geneigt ist, wobei die Auflageseiten (44, 46) miteinander durch die Seitenflächen (48A, 48B) verbunden sind

7. Dorn (10) nach Anspruch 6, **dadurch gekennzeichnet, dass** die ringförmige Einheit (18) Mittel (94) zum Rückholen mindestens eines Blocks (40) an die Auflagefläche (38) umfasst.

8. Dorn (10) nach einem der Ansprüche 5 bis 7, **dadurch gekennzeichnet, dass** die Auflagefläche (38) einen oberen Anschlag zur Blockierung der Blöcke (40) in ihrer Stellung abgrenzt.

9. Dorn (10) nach einem der vorhergehenden Ansprüche, **dadurch gekennzeichnet, dass** jeder Block (40, 42) umfasst:
- ein Verstärkungselement (52), umfassend einen oberen Rand (58) oder/und einen unteren Rand (60), die eine äußere ringförmige Aussparung abgrenzen, die außen in den Seitenflächen (48A, 48B) ausmündet,
- einen äußeren Dichtungsbelag (54), der in der äußeren Aussparung angeordnet ist;
und dass die Aussparungen von zwei angrenzenden Blöcken (40, 42) in der expandierten Konfiguration auf mindestens einem Umfang um die Längsachse (X-X') durch die Seitenflächen (48A, 48B) hindurch miteinander verbunden sind und in Längsrichtung durch mindestens einen des oberen und/oder des unteren Rands (58, 60) verschlossen sind.

10. Dorn (10) nach Anspruch 9, **dadurch gekennzeichnet, dass** das Verstärkungselement (52) eine innere ringförmige Aussparung abgrenzt, die innen und in den Seitenflächen (48A, 48B) ausmündet, wobei jeder Block (40, 42) einen inneren Dichtungsbelag (56) umfasst, der in der inneren ringförmigen Aussparung angeordnet ist, und dass die inneren ringförmigen Aussparungen von zwei angrenzenden Blöcken (40, 42) in der expandierten Konfiguration auf mindestens einem Umfang um die Längsachse (X-X') durch die Seitenflächen (48A, 48B) hindurch miteinander verbunden sind.

11. Dorn (10) nach einem der vorhergehenden Ansprüche, **dadurch gekennzeichnet, dass** er ferner Organe (24) zur Verankerung an der Leitung (12) umfasst, die radial bezüglich des Körpers (16) entfaltbar sind, wobei die Verankerungsorgane (24) unter der ringförmigen Einheit (18) angeordnet sind.

12. Dorn (10) nach einem der vorhergehenden Ansprüche, **dadurch gekennzeichnet, dass** die Expansionsmittel (20, 21) ein Betätigungsorgan (20) umfassen, das mit mindestens einem ersten Block (40) freigebbar fest verbunden ist und mit mindestens einem zweiten Block (42) fest verbunden ist, wobei das Betätigungsorgan (20) in Längsrichtung bezüglich des Körpers (16) beweglich ist zwischen:
- einer Ruhestellung, in der der erste Block (40) und der zweite Block (42) mit dem Betätigungsorgan fest verbunden sind, wobei die ringförmige Einheit (18) ihre kontrahierte Konfiguration einnimmt;
- einer Zwischenstellung, in der der erste Block (40) bezüglich des Betätigungsorgans (20) frei ist und bezüglich des Körpers (16) im Wesentlichen feststehend ist, wobei der zweite Block (42) mit dem Betätigungsorgan (20) fest verbunden ist; und
- einer aktiven ineinander geschobenen Stellung des ersten und des zweiten Blocks (40, 42), in der die ringförmige Einheit (18) ihre expandierte Konfiguration einnimmt.

13. Dorn (10) nach Anspruch 12, **dadurch gekennzeichnet, dass** er Mittel (88, 90) zur Beaufschlagung des Betätigungsorgans von seiner aktiven Stellung in seine Zwischenstellung und freigebbare Mittel (22) zum In-Stellung-Halten des Betätigungsorgans (20) seiner aktiven Stellung umfasst.

14. Bohrschacht zur Fluidförderung, **dadurch gekennzeichnet, dass** er umfasst:
• eine Leitung (12);
• einen Dorn (10) nach einem der vorhergehenden Ansprüche, der in der Leitung (12) angeordnet ist.

15. Bohrschacht nach Anspruch 14, **dadurch gekennzeichnet, dass** die Leitung (12) mindestens ein erstes Rohr (150), ein zweites Rohr (152) und eine Muffe (154) zur Verbindung des ersten und des zweiten Rohrs (150, 152) umfasst, wobei das erste Rohr (150), das zweite Rohr (152) und die Muffe (154) einen Fluidumlaufdurchgang (156) abgrenzen,
und dass die Muffe (154) eine ringförmige Nut (166) zur Aufnahme der ringförmigen Einheit (18) bildet, die in den zentralen Durchgang (156) mündet und einen Durchmesser (D4) aufweist, der größer als der mittlere Durchmesser (D1) des zentralen Durchgangs (156) ist, wobei die ringförmige Einheit (18) in ihrer entfalteten Stellung an einen Boden der ringförmigen Nut (166) dicht angelegt ist.

16. Bohrschacht nach Anspruch 15, **dadurch gekennzeichnet, dass** die Muffe einen Vorsprung (162) zur Blockierung der ringförmigen Einheit (156) in ihrer Stellung aufweist, der innen in den zentralen Durchgang (156) bezüglich des ersten Rohrs (150) und des zweiten Rohrs (152) vorsteht, wobei ein oberer Rand (58) der ringförmigen Einheit (18) axial an dem Vorsprung (162) blockiert ist.
